# EUROPÄISCHE PATENTSCHRIFT

(11) **EP 1 707 442 B1**
(45) Veröffentlichungstag und Bekanntmachung des Hinweises auf die Patenterteilung: **05.11.2008**
(21) Anmeldenummer: 06101686.1
(22) Anmeldetag: 15.02.2006
(51) Int. Cl.: B60R 16/02

(54) **Elektrische Klemmensteuerung für ein Kraftfahrzeug sowie Verfahren zur elektrischen Klemmensteuerung**
Electric circuit controller for a vehicle and method for electric circuit control
Commande de borne électrique pour un poids lourd ainsi que procédé de commande par borne électrique

(30) Priorität: 31.03.2005 DE 102005014660
(43) Veröffentlichungstag der Anmeldung: 04.10.2006
(73) Patentinhaber: ROBERT BOSCH GMBH, 70442 Stuttgart (DE)
(72) Erfinder: Dalakuras, Lambros, 71229, Leonberg (DE); Sillmann, Ingo, 71229, Leonberg (DE)

(56) Entgegenhaltungen:
- EP-A- 0 980 793
- DE-A1- 10 301 905

## Beschreibung

### Stand der Technik

Die Erfindung betrifft eine elektrische Klemmensteuerung sowie ein Verfahren zur elektrischen Klemmensteuerung in einem Kraftfahrzeug nach der Gattung der unabhängigen Ansprüche.

Aufgrund des Einsatzes von elektrischen Lenkungsverriegelungen und elektrischen Zündschlössern finden elektrische Klemmensteuerungen in Kraftfahrzeugen zunehmend Verbreitung gegenüber herkömmlichen, mechanischen Systemen. Dabei werden die Klemmen nicht mehr mechanisch, d.h. beispielsweise direkt durch die Betätigung eines mechanischen Zündschlosses, sondern mit Hilfe eines von einer elektrischen Steuereinheit erzeugten Steuersignals aktiviert oder deaktiviert.

Kommt es zu einem Fehler an einer Klemme, insbesondere der Klemme für die Dauerspannungsversorgung (Klemme 15 oder Klemme 50), des Kraftfahrzeugs, so wird dies dem Fahrer in der Regel angezeigt, und die fehlerhafte Klemme bleibt während der Fahrt aktiv. So läuft beispielsweise ein Verbrennungsmotor des Kraftfahrzeugs im Fehlerfall weiter, um gefährliche Situationen im Straßenverkehr zu vermeiden. Darüber hinaus wird der Fahrer informiert, zur Beseitigung des Fehlers alsbald eine Werkstatt aufzusuchen. Zwar ist eine Aufrechterhaltung der vollen Funktion des Kraftfahrzeugs nicht zwingend notwendig, allerdings sollte eine eventuelle Einschränkung im Fehlerfall für den Benutzer des Kraftfahrzeugs so gering wie möglich sein.

Aus der DE 10301905 A1 ist eine Sicherungsschaltung für einen elektrischen Verbraucher bekannt, die einen Leistungsausgang zur Versorgung des elektrischen Verbrauchers, einen Leistungsschalter zur Beschaltung des Leistungsausgangs, eine Messanordnung und eine Auswerteanordnung aufweise. Mittels der Messanordnung ist der Belastungszustand des Verbrauchers messbar und in ein elektrisches Messsignals wandelbar; wobei das Messsingal an einem Signalausgang der Messanordnung anliegt. Die Messanordnung ist über ihren Signalausgang mit der Auswerteanordnung gekoppelt, wobei bei Überlastung des Verbrauchers die Auswerteanordnung vom Normalzustand in einen Fehlerzustand fällt, und die im Fehlerzustand befindliche Auswerteanordnung über deren Kopplung mit dem Leistungsschalter die Abschaltung des Leistungsausgangs bewirkt, wobei die im Fehlerzustand befindliche Auswerteanordnung unabhängig vom weiteren gemessenen Belastungszustand des Verbrauchers im Fehlerzustand verbleibt. Zusätzlich kann die Messanordnung eine Temperaturerfassungsanordnung aufweisen, die dazu dient, die Temperatur des Verbrauchers zu messen und diesen in Abhängigkeit von dem erzeugten Messsignal bei einer Überlastung zu deaktivieren.

Ein Problem bisher bekannter, elektrischer Klemmensteuerungen besteht in der nicht vorhandenen Möglichkeit, die fehlerhafte Klemme unter ungünstigen Randbedingungen auch nach Beendigung der Fahrt zu deaktivieren, was zur Folge haben kann, dass der Verbrennungsmotor in diesem Fall weiterläuft, obwohl vom Benutzer ein Abschalten des Kraftfahrzeugs gewünscht wird.

### Vorteile der Erfindung

Die elektrische Klemmensteuerung sowie das entsprechende Verfahren für ein Kraftfahrzeug nach der Gattung der unabhängigen Ansprüche umfassen Mittel zur Erzeugung eines Zustandssignals über den aktuellen Zustand der zumindest einen Klemme, ein Fehlersignal zum Anzeigen eines Fehlers der zumindest einen Klemme sowie ein Steuersignals zur Aktivierung oder Deaktivierung der zumindest einen Klemme, wobei weitere Mittel zur Erzeugung eines Zusatzbedingungssignals vorgesehen sind und im Falle eines durch das Fehlersignal angezeigten Fehlers sowie bei Vorliegen des Zusatzbedingungssignals die zumindest eine Klemme unabhängig vom Steuersignal und vom Zustandssignal deaktivierbar ist. Auf diese ist die Deaktivierung einer fehlerhaften Klemme zur Versorgung von Verbrauchern mit Energie und/oder Datensignalen ohne Beeinträchtigung der Sicherheit selbst unter ungünstigen Randbedingungen, d.h. im Fehler- oder Notfall, möglich, wenn dies vom Benutzer des Kraftfahrzeugs gewünscht wird. Darüber hinaus kann zur Kostenersparnis auf ein vollständig redundantes System zur Gewährleistung der vollen Funktionalität des Kraftfahrzeugs im Fehler- bzw. Notfall verzichtet werden. Erfindungsgemäß ist vorgesehen, dass die Mittel zur Erzeugung des Zusatzbedingungssignals eine Handbremse und/oder einen Wählhebel des Kraftfahrzeugs umfassen. In vorteilhafter Weise ist somit gegenüber dem Stand der Technik eine Deaktivierung der fehlerhaften Klemme gewährleistet, sobald die Handbremse vom Fahrer angezogen und/oder der Wählhebel in die Parkstellung (im Falle von Automatikfahrzeugen) bzw. in eine neutrale Stellung (im Falle von Kraftfahrzeugen mit Schaltgetriebe) verbracht wurde, um eine weitere Bewegung des Kraftfahrzeugs zu vermeiden. Insbesondere in Verbindung mit Automatikfahrzeugen bedeutet dies einen Vorteil, da hier zum Beispiel der Verbrennungsmotor nicht einfach durch ein so genanntes Abwürgen deaktiviert werden kann, und daher der Fahrer im Fehler- bzw. Notfall auf das Zusatzbedingungssignal, mit dem er den Wunsch zur Deaktivierung des Verbrennungsmotors anzeigen kann, angewiesen ist.

Weiterhin ist es vorteilhaft, wenn das Zusatzbedingungssignal mit dem Zustandssignal der Klemme über ein UND-Gatter logisch verknüpft ist, um auf diese Weise eine Änderung des aktuellen Zustands der Klemme unter ungünstigen bzw. sicherheitskritischen Randbedingungen vornehmen zu können. Diesbezüglich sollte zum Zweck einer möglichst einfachen Schaltungstopologie das Zusatzbedingungssignal am Eingang des UND-Gatters invertiert werden.

Da sämtliche Signale der elektrischen Klemmensteuerung nur zwischen zwei Zuständen unterscheiden, sieht eine zweckmäßige Ausgestaltungsform der Erfindung vor, dass das Zustandssignal, das Fehlersignal, das Steuersignal und das Zusatzbedingungssignal binäre Signale sind.

Weitere Vorteile der Erfindung ergeben sich durch die in den abhängigen Ansprüchen angegebenen Merkmale sowie aus der Zeichnung und der nachfolgenden Beschreibung.

### Zeichnung

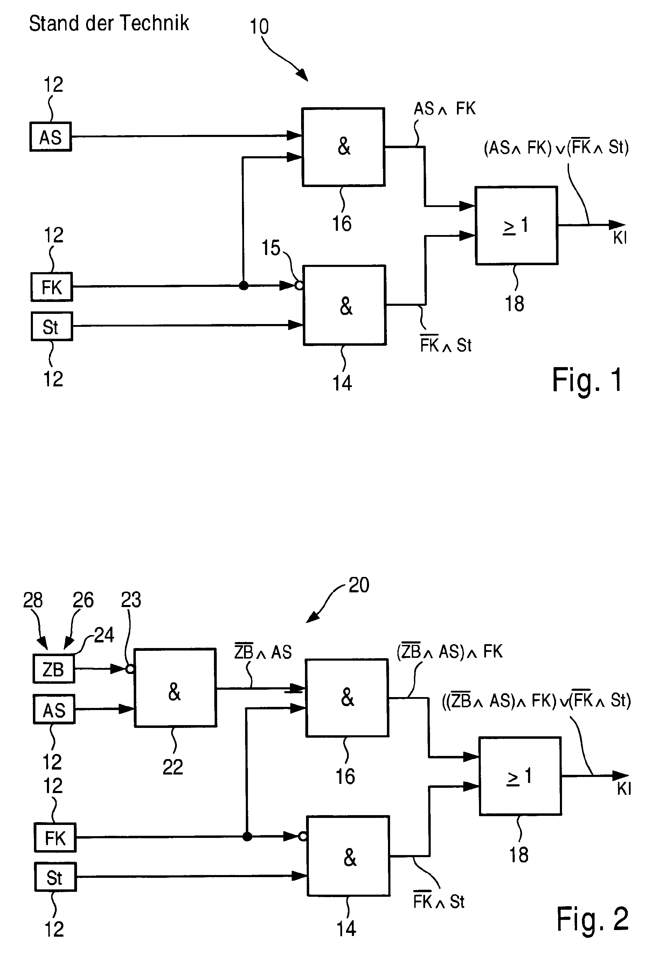

Die Erfindung wird im Folgenden anhand der Figuren 1 und 2 beispielhaft erläutert, wobei gleiche Bezugszeichen in den Figuren auf gleiche Bestandteile mit einer gleichen Funktionsweise hindeuten. Es zeigern
Fig. 1: ein Blockschaltbild einer elektrischen Klemmensteuerung nach dem Stand der Technik und
Fig. 2: ein Blockschaltbild einer erfindungsgemäßen, elektrischen Klemmensteuerung.

### Beschreibung

In Figur 1 ist eine elektrische Klemmensteuerung 10 mit einer Klemme Kl zur Versorgung von Verbrauchern mit Energie und/oder Datensignalen in einem Kraftfahrzeug gemäß dem Stand der Technik gezeigt. Die elektrische Klemmensteuerung 10 umfasst Mittel 12, mit denen ein Zustandssignal AS über den aktuellen Zustand der Klemme Kl, ein Fehlersignal FK zum Anzeigen eines Fehlers der Klemme Kl sowie ein Steuersignal St zur Aktivierung oder Deaktivierung der Klemme Kl erzeugt werden können. Alle drei Signale AS, FK und St liegen in binärer Form vor, da sie lediglich zwischen zwei Zuständen unterscheiden müssen. So liefert das Zustandssignal AS eine Information darüber, in welchem Zustand (aktiv: 1, deaktiv: 0) sich die Klemme Kl gegenwärtig befindet. Mit dem Fehlersignal FK wird ein Fehlerfall (Fehler: 1, kein Fehler: 0) der Klemme Kl angezeigt. Das Steuersignal St dient schließlich dazu, die Klemme Kl vom aktiven in den deaktiven Zustand (0) oder vom deaktiven in den aktiven Zustand (1) zu verbringen.

Über ein erstes UND-Gatter 14 sind das Steuersignal St und das an einen invertierenden Eingang 15 des UND-Gatters 14 gelegte, invertierte Fehlersignal F̅K̅ derart gekoppelt, dass die Beziehung F̅K̅ ^ St gilt. Liegen beispielsweise ein Steuersignal St = 1, d.h. die Klemme Kl soll aktiviert werden, und ein Fehlersignal FK = 0, also fehlerfreier Betrieb, vor, so ergibt sich am Ausgang des UND-Gatters 14 F̅K̅ ^ St = 1 ^ 1 = 1.

Weiterhin sind das Fehlersignal FK und das Zustandssignal AS derart über ein zweites UND-Gatter 16 miteinander verknüpft, dass an dessen Ausgang ein Signal der Form AS Λ FK anliegt. Die beiden Ausgangssignale F̅K̅ ^ St und AS ^ FK der UND-Gatter 14 und 16 werden schließlich über ein ODER-Gatter 18 logisch miteinander verknüpft und liefern an dessen Ausgang ein Signal (AS ^ FK) v (F̅K̅ ^ St) zur Ansteuerung der Klemme Kl gemäß der nachfolgenden Wertetabelle.

| | FK | AS | St | AS ^ FK | F̅K̅ ^ St | (AS ^ FK) v (F̅K̅ ^ St) |
|---|---|---|---|---|---|---|
| kein | 0 | 0 | 0 | 0 | 0 | 0 |
| Fehler | 0 | 0 | 1 | 0 | 1 | 1 |
| | 0 | 1 | 0 | 0 | 0 | 0 |
| | 0 | 1 | 1 | 0 | 1 | 1 |
| Fehler | 1 | 0 | 0 | 0 | 0 | 0 |
| | 1 | 0 | 1 | 0 | 0 | 0 |
| | 1 | 1 | 0 | 1 | 0 | 1 |
| | 1 | 1 | 1 | 1 | 0 | 1 |

In den ersten vier Zeilen der obigen Wertetabelle wird davon ausgegangen, dass kein Fehler (FK = 0) der Klemme Kl vorliegt. In Abhängigkeit vom Steuersignal St wird die Klemme unabhängig vom Zustandssignal AS aktiviert (1) oder deaktiviert (0), und es ist ein ordnungsgemäßer Betrieb möglich. Wird beispielsweise davon ausgegangen, dass die Klemme Kl die Dauerspannungsversorgung (Klemme 15 und/oder Klemme 50) des Kraftfahrzeugs beschreibt, so lässt sich der Verbrennungsmotor wie vorgesehen durch Setzen des entsprechenden Steuersignals St aktivieren oder deaktivieren.

Liegt dagegen ein Fehler an der Klemme Kl vor (FK = 1) so verhält es sich etwas anders. Zwar ist es korrekt, dass sich die Klemme Kl gemäß der sechsten Zeile der obigen Wertetabelle im Fehlerfall trotz Setzen des entsprechenden Steuersignals (St = 1) nun nicht mehr aktivieren lässt, jedoch lässt sie sich nun auch nicht mehr mit Hilfe des Steuersignals St = 0 vom aktiven Zustand (AS = 1) in den deaktiven Zustand verbringen, wie Zeile 7 zu entnehmen ist, da das am Ausgang der elektrischen Klemmensteuerung 10 anliegende Signal (AS ^ FK) v (F̅K̅ ^ St) immer noch den Wert 1 annimmt. Im letzteren Fall ist es dem Fahrer demnach nicht möglich, den Verbrennungsmotor des Kraftfahrzeugs über die Klemme 15 bzw. Klemme 50 abzuschalten, was zu einem erhöhten Sicherheitsrisiko führen kann.

Ausgehend von Figur 1 ist in Figur 2 eine erfindungsgemäße, elektrische Klemmensteuerung 20 mit einem weiteren UND-Gatter 22 sowie einem Zusatzbedingungssignal ZB gezeigt. Das Zusatzbedingungssignal ZB wird mit Hilfe eines weiteren Mittels 24 erzeugt, das eine Handbremse 26 und/oder einen Wählhebel 28 des Kraftfahrzeugs umfasst. Diesbezüglich beschreibt die angezogene Handbremse 26 und/oder der in eine Parkstellung (im Falle von Automatikfahrzeugen) bzw. in eine neutrale Stellung (im Falle von Fahrzeugen mit Schaltgetrieben) verbrachte Wählhebel 28 das Vorliegen des Zusatzbedingungssignals ZB, so dass gilt ZB = 1. Befinden sich die Handbremse 26 und/oder der Wählhebel 28 in einer Stellung, in der das Kraftfahrzeug mit Hilfe des Verbrennungsmotors, d.h. mit eigener Kraft bewegt werden kann, so liegt kein Zusatzbedingungssignal ZB vor und es gilt ZB = 0.

Statt das Zustandssignal AS gemäß Figur 1 direkt zusammen mit dem Fehlersignal FK auf das zweite UND-Gatter 16 zu geben, erfolgt erfindungsgemäß nun zunächst mittels des weiteren UND-Gatters 22 eine logische UND-Verknüpfung des Zustandssignal AS und des an einem invertierenden Eingang 23 des weiteren UND-Gatters 22 gelegten, invertierten Zusatzbedingungssignals Z̅B̅, so dass am Ausgang des weiteren UND-Gatters 22 ein Signal der Form Z̅B̅ ^ AS vorliegt. Dieses Signal wird anschließend mittels des zweiten UND-Gatters 16 logisch mit dem Fehlersignal FK verknüpft, so dass an dessen Ausgang ein Signal der Form (Z̅B̅ ^ AS) ^ FK existiert. Die logische ODER-Verknüpfung von (Z̅B̅ ^ AS) ^ FK mit dem bereits in Figur 1 erläuterten und am Ausgang des ersten UND-Gatters 14 anliegenden Signals FK ^ St führt schließlich zu einem Signal der Form ((Z̅B̅ ^ AS) ^ FK) v (F̅K̅ ^ St) am Ausgang des ODER-Gatters 18 zur Aktivierung oder Deaktivierung der Klemme Kl.

Anhand der nachfolgenden Wertetabelle soll nun die Funktionsweise der erfindungsgemäßen Klemmensteuerung 20 erläutert werden.

| | ZB | FK | AS | St | Z̅B̅ ^ AS | (Z̅B̅ ^ AS) ^ FK | F̅K̅ ^ St | ((Z̅B̅ ^ AS) ^ FK) v (FK ^ St) |
|---|---|---|---|---|---|---|---|---|
| kein Fehler | 0 | 0 | 0 | 0 | 0 | 0 | 0 | 0 |
| | 0 | 0 | 0 | 1 | 0 | 0 | 1 | 1 |
| | 0 | 0 | 1 | 0 | 1 | 0 | 0 | 0 |
| | 0 | 0 | 1 | 1 | 1 | 0 | 1 | 1 |
| Fehler | 0 | 1 | 0 | 0 | 0 | 0 | 0 | 0 |
| | 0 | 1 | 0 | 1 | 0 | 0 | 0 | 0 |
| | 0 | 1 | 1 | 0 | 1 | 1 | 0 | 1 |
| | 0 | 1 | 1 | 1 | 1 | 1 | 0 | 1 |
| kein Fehler | 1 | 0 | 0 | 0 | 0 | 0 | 0 | 0 |
| | 1 | 0 | 0 | 1 | 0 | 0 | 1 | 1 |
| | 1 | 0 | 1 | 0 | 0 | 0 | 0 | 0 |
| | 1 | 0 | 1 | 1 | 0 | 0 | 1 | 1 |
| Fehler | 1 | 1 | 0 | 0 | 0 | 0 | 0 | 0 |
| | 1 | 1 | 0 | 1 | 0 | 0 | 0 | 0 |
| | 1 | 1 | 1 | 0 | 0 | 0 | 0 | 0 |
| | 1 | 1 | 1 | 1 | 0 | 0 | 0 | 0 |

Deutlich wird zunächst, dass ohne Vorliegen des Zusatzbedingungssignals ZB, d.h. für ZB = 0, die Werte für das Signal ( (Z̅B̅ ^ AS) ^ FK) v (F̅K̅ ^ St) gemäß der oben Hälfte der obigen Wertetabelle und (AS ^ FK) v (F̅K̅ ^ St) gemäß der Wertetabelle zu Figur 1 identisch sind.

Werden nun vom Fahrer die Handbremse 26 angezogen und/oder der Wählhebel 28 in eine Stellung verbracht, in der das Kraftfahrzeug aus eigener Kraft nicht mehr bewegt werden kann, so liegt das Zusatzbedingungssignal ZB vor, und es gilt ZB = 1. Ist der aktuelle Zustand der Klemme Kl fehlerfrei (FK = 0), so lässt sich die Klemme Kl mit Hilfe des Steuersignals St sowohl in einen aktiven (1) als auch in einen deaktiven (0) Zustand versetzen. In diesem Fall handelt es sich um einen ordnungsgemäße Betrieb des Kraftfahrzeugs, der sich mit den ersten vier Zeilen der obigen Wertetabelle deckt, d.h. es spielt in diesem Fall keine Rolle, ob das Zusatzbedingungssignal ZB vorliegt oder nicht.

Wird dagegen ein Fehler der Klemme Kl angezeigt (FK = 1), so ergibt sich ein signifikanter Unterschied zwischen der elektrischen Klemmensteuerung 10 gemäß dem Stand der Technik und der erfindungsgemäßen Klemmensteuerung 20, da es nun möglich ist, mit Hilfe des Zusatzbedingungssignals (ZB = 1) unabhängig vom Steuersignals St und vom Zustandssignal AS die Klemme Kl zu deaktivieren (vgl. hierzu die jeweils letzten beiden Zeilen der Wertetabellen zu Figur 1 und Figur 2 mit den fett hervorgehobenen und sich unterscheidenden Werten der Signale ((Z̅B̅ ^ AS) ^ FK) v (F̅K̅ ^ St) und (AS ^ FK) v (F̅K̅ ^ St)). Es ist dem Fahrer somit beispielsweise möglich, den Verbrennungsmotor des Kraftfahrzeugs im Fehler- bzw. Notfall durch Anziehen der Handbremse und/oder Verbringen des Wählhebels in eine Park- bzw. neutrale Stellung abzuschalten, so dass eine Erhöhung der Sicherheit des Fahrers sowie von das Kraftfahrzeug umgebenden oder an ihm arbeitenden Personen gegeben ist.

Es sei abschließend noch darauf hingewiesen, dass das gezeigte Ausführungsbeispiel nicht auf die Figur 2 beschränkt ist. So können statt der Handbremse und/oder des Wählhebels auch andere Mittel zur Erzeugung des Zusatzbedingungssignals, wie beispielsweise ein zusätzlicher Taster oder Schalter entweder in Kombination mit dem Wählhebel bzw. der Handbremse oder für sich genommen zum Einsatz kommen. Weiterhin können statt der Klemmen 15 und 50 für die Dauerspannungsversorgung des Kraftfahrzeugs auch andere Klemmen sowohl einzeln als auch gleichzeitig deaktivierbar sein.

## Patentansprüche

1. Elektrische Klemmensteuerung (20) für ein Kraftfahrzeug, mit zumindest einer Klemme (Kl) zur Versorgung von elektrischen Verbrauchern mit Energie und/oder Datensignalen, umfassend Mittel (12) zur Erzeugung eines Zustandssignals (AS) über den aktuellen Zustand der zumindest einen Klemme (Kl), eines Fehlersignals (FK) zum Anzeigen eines Fehlers der zumindest einen Klemme (Kl) sowie eines Steuersignals (St) zur Aktivierung oder Deaktivierung der zumindest einen Klemme (Kl), wobei weitere Mittel (24) zur Erzeugung eines Zusatzbedingungssignals (ZB) vorgesehen sind, und wobei im Falle eines durch das Fehlersignal (FK) angezeigten Fehlers und bei Vorliegen des Zusatzbedingungssignals (ZB) die zumindest eine Klemme (Kl) unabhängig vom Steuersignal (St) und vom Zustandssignal (AS) deaktivierbar ist, **dadurch gekennzeichnet, dass** die weiteren Mittel (24) zur Erzeugung des Zusatzbedingungssignals (ZB) eine Handbremse (26) und/oder einen Wählhebel (28) des Kraftfahrzeugs umfassen.

2. Elektrische Klemmensteuerung (20) nach Anspruch 1, **dadurch gekennzeichnet, dass** das Zusatzbedingungssignal (ZB) die Stellung der Handbremse (26) und/oder des Wählhebels (28) beschreibt.

3. Elektrische Klemmensteuerung (20) nach einem der vorhergehenden Ansprüche 1 oder 2, **dadurch gekennzeichnet, dass** das Zusatzbedingungssignal (ZB) mit dem Zustandssignal (AS) über ein UND-Gatter (22) logisch verknüpft ist.

4. Elektrische Klemmensteuerung (20) nach Anspruch 3, **dadurch gekennzeichnet, dass** das Zusatzbedingungssignal (ZB) an einem invertierenden Eingang (23) des UND-Gatters (22) liegt.

5. Elektrische Klemmensteuerung (20) nach einem der vorhergehenden Ansprüche, **dadurch gekennzeichnet, dass** das Zustandssignal (AS), das Fehlersignal (FK), das Steuersignal (St) und das Zusatzbedingungssignal (ZB) binäre Signale sind.

6. Verfahren zur elektrischen Klemmensteuerung zumindest einer Klemme (Kl) in einem Kraftfahrzeug zur Versorgung elektrischer Verbraucher mit Energie und/oder Datensignalen, wobei ein Zustandssignal (AS) über den aktuellen Zustand der zumindest einen Klemme (Kl), ein Fehlersignal (FK) zum Anzeigen eines Fehlers der zumindest einen Klemme (Kl) sowie ein Steuersignal (St) zur Aktivierung oder Deaktivierung der zumindest einen Klemme (Kl) erzeugt werden, und wobei im Falle eines durch das Fehlersignal (FK) angezeigten Fehlers und bei Vorliegen eines Zusatzbedingungssignals (ZB) die zumindest eine Klemme (Kl) unabhängig vom Steuersignal (St) und vom Zustandssignal (AS) deaktiviert wird, **dadurch gekennzeichnet, dass** das Zusatzbedingungssignal (ZB) die Stellung einer Handbremse (26) und/oder eines Wählhebels (28) beschreibt.

7. Verfahren zur elektrischen Klemmensteuerung nach Anspruch 6, **dadurch gekennzeichnet, dass** das Zusatzbedingungssignal (ZB) invertiert und mit dem Zustandssignal (AS) über ein UND-Gatter (22) logisch verknüpft wird.

8. Verfahren zur elektrischen Klemmensteuerung nach einem der vorhergehenden Ansprüche 6 oder 7, **dadurch gekennzeichnet, dass** das Zustandssignal (AS), das Fehlersignal (FK), das Steuersignal (St) und das Zusatzbedingungssignal (ZB) binäre Signale sind.

## Claims

1. Electrical terminal controller (20) for a motor vehicle, having at least one terminal (Kl) for supplying power and/or data signals to electrical loads, comprising means (12) for generating a state signal (AS) about the current state of the at least one terminal (Kl), a fault signal (FK) for indicating a fault in the at least one terminal (Kl), and a control signal (St) for activating or deactivating the at least one terminal (Kl), with further means (24) for generating an additional condition signal (ZB) being provided, and it being possible to deactivate the at least one terminal (Kl) independently of the control signal (St) and of the state signal (AS) in the event of a fault indicated by the fault signal (FK) and when the additional condition signal (ZB) is present, **characterized in that** the further means (24) for generating the additional condition signal (ZB) comprise a handbrake (26) and/or a gear selector lever (28) of the motor vehicle.

2. Electrical terminal controller (20) according to Claim 1, **characterized in that** the additional condition signal (ZB) describes the position of the handbrake (26) and/or of the gear selector lever (28).

3. Electrical terminal controller (20) according to either of the preceding Claims 1 and 2, **characterized in that** the additional condition signal (ZB) is logically combined with the state signal (AS) by means of an AND gate (22).

4. Electrical terminal controller (20) according to Claim 3, **characterized in that** the additional condition signal (ZB) is applied to an inverting input (23) of the AND gate (22).

5. Electrical terminal controller (20) according to one of the preceding claims, **characterized in that** the state signal (AS), the fault signal (FK), the control signal (St) and the additional condition signal (ZB) are binary signals.

6. Method for electrical terminal control of at least one terminal (Kl) in a motor vehicle for supplying power and/or data signals to electrical loads, with a state signal (AS) about the current state of the at least one terminal (Kl), a fault signal (FK) for indicating a fault in the at least one terminal (Kl), and a control signal (St) for activating or deactivating the at least one terminal (Kl) being generated, and with the at least one terminal (Kl) being deactivated independently of the control signal (St) and of the state signal (AS) in the event of a fault indicated by the fault signal (FK) and when an additional condition signal (ZB) is present, **characterized in that** the additional condition signal (ZB) describes the position of a handbrake (26) and/or of a gear selector lever (28).

7. Method for electrical terminal control according to Claim 6, **characterized in that** the additional condition signal (ZB) is inverted and logically combined with the state signal (AS) by means of an AND gate (22).

8. Method for electrical terminal control according to either of the preceding Claims 6 and 7, **characterized in that** the state signal (AS), the fault signal (FK), the control signal (St) and the additional condition signal (ZB) are binary signals.

## Revendications

1. Dispositif de commande des bornes électriques (20) d'un véhicule automobile comportant au moins une borne (Kl) pour assurer l'alimentation en énergie et/ou la transmission de signaux de données à des utilisateurs d'énergie électrique, comprenant des moyens (12) pour générer un signal d'état (AS) relatif à l'état actuel d'au moins une borne (Kl), un signal de défaut (FK) pour indiquer un défaut d'au moins une borne (Kl) ainsi qu'un signal de commande (St) pour activer ou désactiver au moins une borne (Kl),
d'autres moyens (24) étant prévus pour générer un signal de condition supplémentaire (ZB) et
dans le cas d'un défaut indiqué par le signal de défaut (FK) et si le signal de condition supplémentaire (ZB) est appliqué, au moins une borne (Kl) est désactivée indépendamment du signal de commande (St) et du signal d'état (AS),
**caractérisé en ce que**
les autres moyens (24) pour générer un signal de condition supplémentaire (ZB) comprennent le frein à main (26) et/ou le levier de sélecteur (28) du véhicule automobile.

2. Dispositif de commande des bornes électriques (20) selon la revendication 1,
**caractérisé en ce que**
le signal de condition supplémentaire (ZB) décrit la position du frein à main (26) et/ou du levier de sélecteur (28).

3. Dispositif de commande des bornes électriques (20) selon l'une des revendications précédentes 1 ou 2,
**caractérisé en ce que**
le signal de condition supplémentaire (ZB) est combiné au signal d'état (AS) selon une combinaison logique par une porte ET (22).

4. Dispositif de commande des bornes électriques (20) selon la revendication 3,
**caractérisé en ce que**
le signal de condition supplémentaire (ZB) est appliqué à l'entrée inversée (23) de la porte ET (22).

5. Dispositif de commande des bornes électriques (20) selon l'une des revendications précédentes,
**caractérisé en ce que**
le signal d'état (AS), le signal le défaut (FK), le signal de commande (St) et le signal de condition supplémentaire (ZB) sont des signaux binaires.

6. Procédé de commande des bornes électriques d'au moins une borne (Kl) d'un véhicule automobile pour l'alimentation d'utilisateurs d'énergie électrique et/ou en signaux de données, selon lequel on génère un signal d'état (AS) concernant l'état actuel d'au moins une borne (Kl), un signal de défaut (FK) pour l'affichage d'un défaut d'au moins une borne (Kl) ainsi qu'un signal de commande (St) pour activer ou désactiver au moins une borne (Kl) et dans le cas d'un défaut indiqué par le signal de défaut (FK) et en présence d'un signal de condition supplémentaire (ZB), on désactive au moins une borne (Kl) indépendamment du signal de commande (St) et du signal d'état (AS),
**caractérisé en ce que**
le signal de condition supplémentaire (ZB) décrit la position du frein à main (26) et/ou du levier de sélecteur (28).

7. Procédé de commande des bornes électriques selon la revendication 6,
**caractérisé en ce que**
le signal de condition supplémentaire (ZB) est inversé et est combiné selon une combinaison logique au signal d'état (AS) par l'intermédiaire d'une porte ET (22).

8. Procédé de commande des bornes électriques selon l'une des revendications précédentes 6 ou 7,
**caractérisé en ce que**
le signal d'état (AS), le signal le défaut (FK), le signal de commande (St) et le signal de condition supplémentaire (ZB) sont des signaux binaires.
